# FASCICULE DE BREVET EUROPEEN

(11) **EP 4 067 137 B1**
(45) Date de publication et mention de la délivrance du brevet: **01.05.2024**
(21) Numéro de dépôt: 22165985.7
(22) Date de dépôt: 31.03.2022
(51) Int. Cl.: B60J 5/04, B60J 5/06, B61C 17/04

(54) **CAISSE DE VÉHICULE TERRESTRE AVEC TRAPPE TECHNIQUE À OUVERTURE COULISSANTE**
WAGENKASTEN EINES LANDFAHRZEUGS MIT TECHNISCHER KLAPPE MIT SCHIEBEÖFFNUNG
VEHICLE BODY OF A LAND VEHICLE WITH INSPECTION HATCH WITH SLIDING OPENING

(30) Priorité: 31.03.2021 FR 2103321
(43) Date de publication de la demande: 05.10.2022
(73) Titulaire: SpeedInnov, 75008 Paris (FR)
(72) Inventeur: CHARBONNEL, Fabrice, 17290 THAIRE (FR); PERIN, Daniel, 17220 SAINT-ROGATIEN (FR)
(74) Mandataire: Lavoix

(56) Documents cités:
- AT-B- 258 136
- CH-A5- 602 405
- DE-B3-102015 218 872

## Description

La présente invention concerne une caisse de véhicule terrestre, du type comportant : une paroi externe, sensiblement verticale, ladite paroi externe s'étendant dans une direction longitudinale horizontale ; un compartiment technique comprenant une ouverture débouchant sur ladite paroi externe ; et au moins un dispositif de fermeture apte à fermer de manière réversible le compartiment technique, ledit dispositif de fermeture étant mobile entre une configuration ouverte et une configuration fermée.

L'invention s'applique particulièrement aux véhicules ferroviaires, de type trains ou trams, mais également aux véhicules routiers de type autobus.

Les véhicules ferroviaires sont couramment munis de trappes donnant accès à des compartiments techniques. De telles trappes sont formées par des ouvertures dans les parois du véhicule, lesdites ouvertures étant fermées par des portes ou des volets. Un example est montré dans le document DE 10 2015 218872 B3.

De manière connue, les volets sont articulés aux parois du véhicule selon un axe horizontal. En cas d'ouverture intempestive d'un volet pendant le déplacement du véhicule, l'encombrement généré par ledit volet peut dépasser un gabarit prévu par les normes de circulation dudit véhicule. Un tel dépassement peut provoquer des accidents, notamment avec des personnes se trouvant sur un quai de gare. Des exemples d'autres types de volets sont connus des documents CH 602 405 A5 et AT 258 136 B.

La présente invention a pour but de limiter les risques d'accidents liés aux dépassements de gabarit, tout en permettant un accès simple et rapide aux compartiments techniques du véhicule.

A cet effet, l'invention a pour objet une caisse de véhicule terrestre du type précité, dans laquelle le dispositif de fermeture comporte : un panneau fixé à la paroi externe et recouvrant l'ouverture du compartiment technique, ledit panneau comprenant un premier et un deuxième orifices alignés selon la direction longitudinale ; un premier volet associé au premier orifice ; et un deuxième volet associé au deuxième orifice ; et un premier rail fixé au panneau, chacun des premier et deuxième volets comprenant des moyens de coulissement dans ledit premier rail, chacun des premier et deuxième volets étant mobile par rapport au premier rail entre une configuration ouverte et une configuration fermée, lesdites configurations ouverte et fermée correspondant respectivement à une ouverture et à une fermeture de l'orifice associé audit volet.

Suivant d'autres aspects avantageux de l'invention, la caisse de véhicule terrestre comporte l'une ou plusieurs des caractéristiques suivantes, prises isolément ou suivant toutes les combinaisons techniquement possibles :
- le dispositif de fermeture est configuré de sorte que, lorsque l'un des premier et deuxième volets est en configuration ouverte, l'autre des premier et deuxième volet est bloqué e configuration fermée ;
- les moyens de coulissement de chacun des premier et deuxième volets dans le premier rail comprennent au moins un galet apte à coulisser dans ledit premier rail ;
- le premier rail comporte au moins une portion principale, s'étendant selon la direction longitudinale, et une première et une deuxième portions de rangement, associées respectivement au premier et au deuxième volets, chacune desdites portions de rangement ouvrant sur la portion principale ; dans la configuration fermée de chacun des premier et deuxième volets, l'au moins un galet dudit premier ou deuxième volet est dans la portion de rangement associée audit volet ; et dans la configuration ouverte de chacun des premier et deuxième volets, l'au moins un galet dudit premier ou deuxième volet est dans la portion principale ;
- le dispositif de fermeture est configuré de sorte que, lorsque l'au moins un galet de l'un des premier et deuxième volets est dans la portion principale du premier rail, l'au moins un galet de l'autre des premier et deuxième volet est bloqué dans la portion de rangement associée ;
- les premier et deuxième volets et le premier rail sont fixés à une face du panneau orientée vers l'intérieur du compartiment technique ;
- le dispositif de fermeture comporte en outre un deuxième rail fixé au panneau, chacun des premier et deuxième volets comprenant des moyens de coulissement dans ledit deuxième rail, chacun des premier et deuxième volets étant mobile par rapport au deuxième rail entre la configuration ouverte et la configuration fermée ;
- l'un des premier et deuxième rails est disposé au-dessus des premier et deuxième orifices, l'autre des premier et deuxième rails étant disposé au-dessous des premier et deuxième orifices ;
- le compartiment technique comprend au moins une vanne de vidange et/ou de rinçage et/ou au moins un robinet de coupure de circuit pneumatique du véhicule.

L'invention se rapporte également à un véhicule terrestre comprenant une caisse telle que décrite ci-dessus.

L'invention sera mieux comprise à la lecture de la description qui va suivre, donnée uniquement à titre d'exemple non limitatif et faite en se référant aux dessins sur lesquels :
la figure 1 est une vue schématique de détail d'un véhicule terrestre selon un mode de réalisation de l'invention, comprenant un dispositif de fermeture dans une première configuration ;
la figure 2 est une vue schématique du dispositif de fermeture de la figure 1, dans une deuxième configuration ; et
la figure 3 est une vue partielle, en coupe, du dispositif de fermeture des figures 1 et 2.

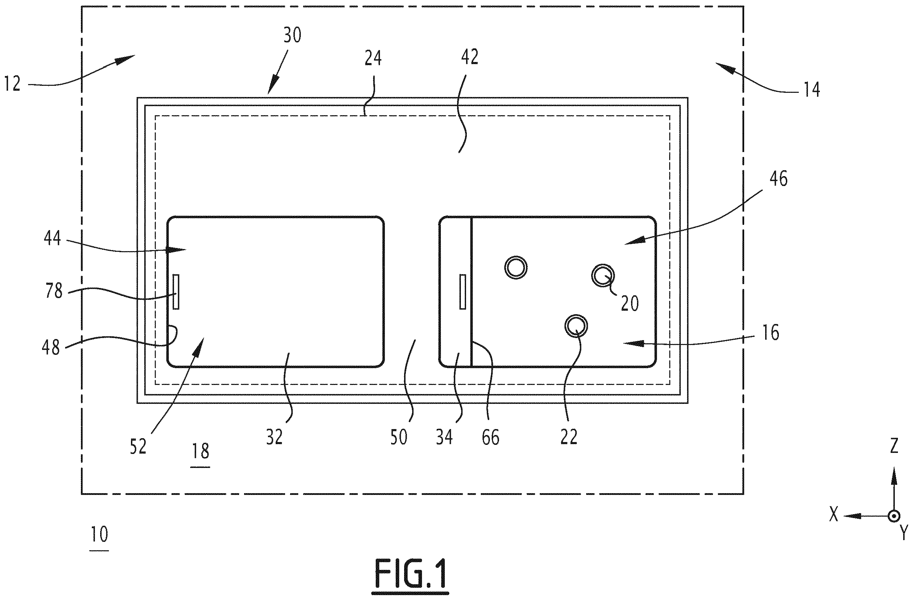

La figure 1 représente une vue de détail d'un véhicule terrestre 10 selon un mode de réalisation de l'invention.

Dans le mode de réalisation représenté, le véhicule terrestre 10 est une voiture pour véhicule ferroviaire, de type train ou tram. Un tel véhicule ferroviaire comporte par exemple plusieurs voitures 10 analogues, reliées les unes aux autres.

En variante non représenté, le véhicule terrestre 10 est un véhicule routier de type autobus.

Le véhicule terrestre 10 comprend une caisse 12 et une pluralité de roues (non représentées) mobiles en rotation par rapport à la caisse.

On considère une base orthonormée (X, Y, Z) associée à la caisse 12, la direction Z représentant la verticale. La caisse s'étend selon la direction horizontale X, dite direction longitudinale, correspondant à une direction de déplacement du véhicule terrestre 10.

La caisse 12 comprend notamment : une paroi latérale 14 ; un compartiment technique 16 ; et un dispositif 18 de fermeture dudit compartiment technique.

La paroi latérale 14 s'étend selon la direction longitudinale X. De préférence, ladite paroi latérale est sensiblement verticale.

Le compartiment technique 16 est par exemple destiné à l'entretien d'au moins un circuit hydraulique du véhicule 10. Le compartiment technique 16 renferme par exemple une ou plusieurs vannes 20, 22 de vidange et/ou de rinçage.

En variante ou par ailleurs, le compartiment technique 16 est par exemple destiné à l'entretien d'au moins un circuit pneumatique du véhicule 10, tel qu'un circuit pneumatique de freinage. Le compartiment technique 16 renferme par exemple un ou plusieurs robinets de coupure (non représentés).

Dans le cas où le véhicule terrestre 10 est une voiture de véhicule ferroviaire comprenant plusieurs voitures analogues, le circuit hydraulique ou pneumatique s'étend de préférence sur plusieurs voitures dudit véhicule ferroviaire.

Le compartiment technique 16 est disposé à l'intérieur de la caisse 12 et comporte une ouverture 24 débouchant sur la paroi latérale 14. Dans le mode de réalisation représenté, l'ouverture 24 a une forme sensiblement rectangulaire avec des côtés s'étendant selon X et selon Z.

Le dispositif de fermeture 18 est apte à fermer de manière réversible le compartiment technique 16. Plus précisément, le dispositif de fermeture 18 comporte : un panneau 30 ; un premier 32 et un deuxième 34 volets ; un rail supérieur 36 et un rail inférieur 38.

Le panneau 30 est fixé à la paroi latérale 14 de la caisse 12, de sorte à recouvrir l'ouverture 24 du compartiment technique 16. De préférence, le panneau 30 est fixé à une face extérieure de la paroi latérale 14, c'est-à-dire à une face orientée vers l'extérieur de la caisse 12.

Le panneau 30 comporte une face interne 40 et une face externe 42, orientées respectivement vers l'intérieur et vers l'extérieur de la caisse 12.

Le panneau 30 comprend un premier 44 et un deuxième 46 orifices, alignés selon la direction longitudinale X. De préférence, chacun des premier et deuxième orifices 44, 46 présente une même hauteur selon Z. Dans le mode de réalisation représenté, on considère que les premier 44 et deuxième 46 orifices présentent des formes rectangulaires identiques, les côtés des rectangles s'étendant selon X et selon Z.

De préférence, chacun des premier 44 et deuxième 46 orifices présente un bord 48 refermé sur lui-même. Dans le mode de réalisation représenté, le panneau 30 comporte une languette 50 disposée entre les premier et deuxième orifices 44, 46 selon la direction X.

Les premier 32 et deuxième 34 volets sont associés respectivement au premier orifice 44 et au deuxième orifice 48 du panneau 30. Comme il sera décrit par la suite, chacun des premier 32 et deuxième 34 volets est mobile par rapport au panneau 30 entre une configuration ouverte et une configuration fermée, lesdites configurations ouverte et fermée correspondant respectivement à une ouverture et à une fermeture de l'orifice 44, 46 associé.

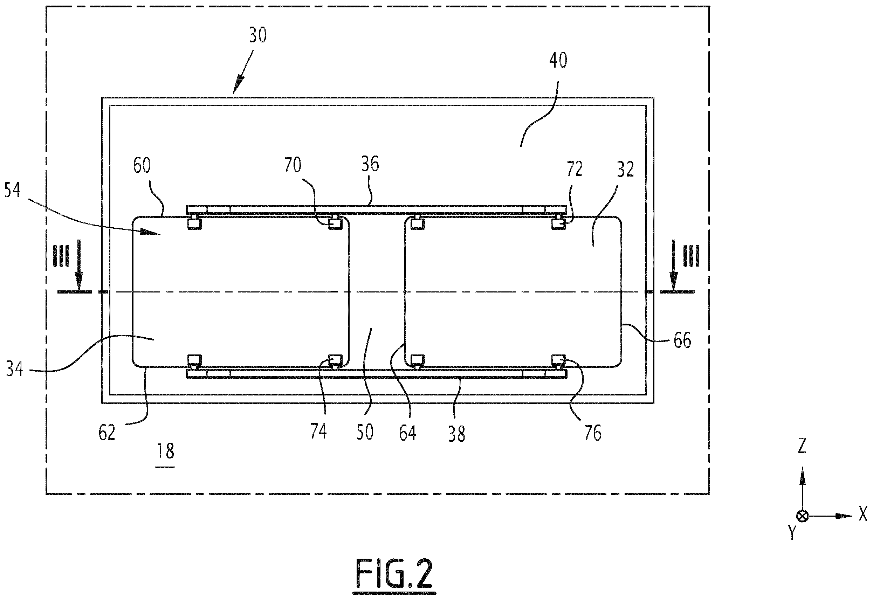

Dans la première configuration de la figure 1, le premier volet 32 est en configuration fermée et le deuxième volet 34 est dans une configuration partiellement ouverte. Dans la deuxième configuration de la figure 2, chacun des premier 32 et deuxième 34 volets est en configuration fermée.

Les volets 32, 34 sont disposés contre la face interne 40 du panneau 30. Chaque volet comporte une surface extérieure 52 et une surface intérieure 54, respectivement orientées vers les orifices 44, 46 et vers l'intérieur du compartiment technique 16.

De préférence, chacun des premier 32 et deuxième 34 volets a une forme sensiblement rectangulaire, dont les dimensions sont aptes à recouvrir l'orifice 44, 46 associé. Dans le mode de réalisation représenté, les premier 32 et deuxième 34 volets sont de dimensions sensiblement identiques.

Plus précisément, chaque volet 32, 34 comporte un bord supérieur 60 et un bord inférieur 62, s'étendant sensiblement selon X. En outre, chaque volet 32, 34 comporte un bord central 64 et un bord latéral 66, s'étendant sensiblement selon Z. Dans la configuration de la figure 2, chaque volet étant en configuration fermée, le bord central 64 est le bord disposé contre la languette 50 du panneau 30 ; et le bord latéral 66 est le bord disposé à l'écart de ladite languette.

Chaque volet 32, 34 comporte en outre des moyens 70, 72, 74, 76 de coulissement dans le rail supérieur 36 et dans le rail inférieur 38.

Plus précisément, la surface intérieure 54 de chaque volet 32, 34 comporte des galets supérieurs 70, 72 et des galets inférieurs 74, 76, disposés respectivement le long du bord supérieur 60 et du bord inférieur 62 dudit volet. Chaque galet forme une saillie verticale par rapport audit bord supérieur ou inférieur.

Un premier 70, 74 galet supérieur ou inférieur est disposé proche du bord central 64 du volet. Un second 72, 76 galet supérieur ou inférieur est disposé proche du bord latéral 66 du volet. De préférence, une distance entre le premier 70, 74 galet supérieur ou inférieur et le bord central 64 est plus faible qu'une distance entre le second 72, 76 galet supérieur ou inférieur et le bord latéral 66.

De préférence, la surface extérieure 52 d'au moins un volet 32, 34 comporte un élément de préhension 78, plus préférentiellement situé proche du bord latéral 66. L'élément de préhension 78 est par exemple une poignée ou une encoche.

Chacun des rails supérieur 36 et inférieurs 38 est fixé à la face interne 40 du panneau 30, respectivement au-dessus et au-dessous des orifices 44, 46. Chacun des rails supérieur 36 et inférieurs 38 s'étend sensiblement selon X.

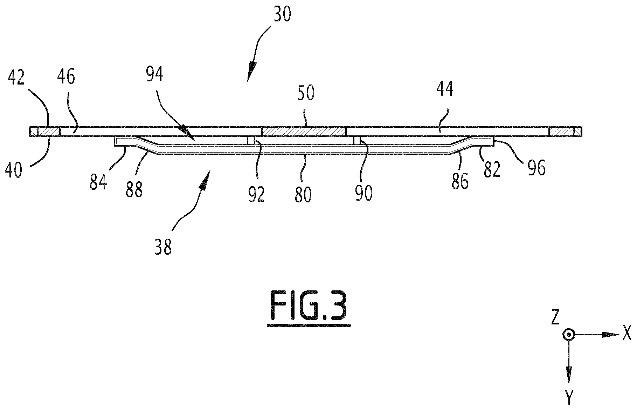

La figure 3 montre une vue en coupe du panneau 30, le rail inférieur 38 étant visible en vue de dessus. Dans la suite de la description, on considère que les rails supérieur 36 et inférieur 38 ont une forme identique.

Chaque rail 36, 38 comporte : une portion principale 80 ; une première 82 et une deuxième 84 portions d'extrémité ; une première 86 et une deuxième 88 portions intermédiaires ; et une première 90 et une deuxième 92 portions de rangement.

La portion principale 80 s'étend sensiblement selon X. De préférence, la portion principale 80 forme au moins 50%, plus préférentiellement au moins 75%, d'une longueur totale selon X du rail 36, 38.

Chacune des portions d'extrémité 82, 84 s'étend sensiblement selon X, parallèlement à la portion principale 80. Chacune des portions d'extrémité 82, 84 est disposée contre la face interne 40 du panneau 30.

Chacune des portions intermédiaires 86, 88 relie la portion principale 80 à l'une des portions d'extrémité 82, 84. Chacune des portions intermédiaires 86, 88 s'étend dans un plan (X, Y) de manière inclinée par rapport à X. Ainsi, la portion principale 80 et la face interne 40 du panneau 30 sont séparées par un espace 94 selon Y.

Les portions principale 80, intermédiaires 86, 88 et d'extrémité 82, 84 forment une trajectoire continue pour les galets 70, 72, 74, 76 des volets 32, 34. Ladite trajectoire est fermée par une butée 96 en bout de chaque portion d'extrémité 82, 84.

En outre, chaque portion de rangement 90, 92 s'étend selon Y depuis la face interne 40 du panneau 30 et ouvre sur la portion principale 80. Selon X, chaque portion de rangement 90, 92 est disposée proche de la languette 50 du panneau 30.

Dans le véhicule terrestre 10, le compartiment technique 16 et le dispositif de fermeture 18 sont configurés de sorte que, lorsque le panneau 30 est assemblé à la paroi latérale 14 de la caisse, les volets 32, 34 et les rails 36, 38 sont reçus dans l'ouverture 24 du compartiment technique 16.

La deuxième configuration du dispositif de fermeture 18, telle que représentée à la figure 2, est décrite plus en détail ci-après.

Le premier volet 32 étant en configuration fermée, le premier 70 et le second 72 galets supérieurs dudit premier volet 32 sont disposés respectivement dans la première portion d'extrémité 82 et dans la première portion de rangement 90 du rail supérieur 36. Par ailleurs, le premier 74 et le second 76 galets inférieurs dudit premier volet 32 sont disposés respectivement dans la première portion d'extrémité 82 et dans la première portion de rangement 90 du rail inférieur 38.

En outre, le deuxième volet 34 étant en configuration fermée, le premier 70 et le second 72 galets supérieurs dudit deuxième volet 34 sont disposés respectivement dans la deuxième portion d'extrémité 84 et dans la deuxième portion de rangement 92 du rail supérieur 36. Par ailleurs, le premier 74 et le second 76 galets inférieurs dudit deuxième volet 34 sont disposés respectivement dans la deuxième portion d'extrémité 84 et dans la deuxième portion de rangement 92 du rail inférieur 38.

La première configuration du dispositif de fermeture 18, telle que représentée à la figure 1, est décrite plus en détail ci-après.

Le premier volet 32 est dans la configuration fermée décrite ci-dessus. En revanche, le deuxième volet 34 est dans une configuration partiellement ouverte, c'est-à-dire qu'une partie du deuxième orifice 46 est dégagée.

Dans ladite configuration partiellement ouverte du deuxième volet 34, les premier 70 et second 72 galets supérieurs dudit deuxième volet 34 sont disposés dans la portion principale 80 du rail supérieur 36, de part et d'autre de la première portion de rangement 90 dudit rail. De même, les premier 74 et second 76 galets inférieurs dudit deuxième volet 34 sont disposés dans la portion principale 80 du rail inférieur 38, de part et d'autre de la première portion de rangement 90 dudit rail.

Ainsi, dans la configuration de la figure 1, chacun des premiers galets supérieur 70 et inférieur 74 du premier volet 32 est bloqué dans la portion de rangement 90 correspondante du rail supérieur 36 ou inférieur 38. Autrement dit, la présence des galets du deuxième volet 34 dans la portion principale 80 des rails 36, 38 bloque le premier volet 32 en configuration fermée.

De manière analogue, non représentée, la présence des galets du premier volet 32 dans la portion principale 80 des rails 36, 38 bloque le deuxième volet 34 en configuration fermée.

Un procédé de fonctionnement du véhicule 10 et du dispositif de fermeture 18 va à présent être décrit.

Lors d'un déplacement du véhicule 10, chacun des premier 32 et deuxième 34 volets du dispositif de fermeture 18 est en configuration fermée. Le positionnement des volets 32, 34 du côté de la face interne 40 du panneau 30 offre une certaine protection contre les ouvertures intempestives desdits volets.

Au cas où l'un des volets 32, 34 s'ouvrirait durant le déplacement du véhicule, la présence des galets dudit volet dans la portion principale 80 des rails 36, 38 empêche l'autre volet de s'ouvrir à son tour.

Par ailleurs, les volets 32, 34 se déplaçant le long de la face interne 40 du panneau 30, l'ouverture d'un volet ne modifie pas l'encombrement autour du véhicule terrestre 10 selon la direction transversale Y. Cet encombrement reste donc contenu dans un gabarit prévu par les normes de circulation dudit véhicule.

A l'arrêt du véhicule 10, afin d'accéder aux vannes 20, 22 pour entretenir le circuit hydraulique, un opérateur ouvre l'un des volets, par exemple le deuxième volet 34.

A cet effet, l'opérateur exerce une poussée selon Y sur le deuxième volet 34 à proximité du bord central 64, de sorte à déplacer les seconds galets supérieur 72 et inférieur 76 le long des deuxièmes 92 portions de rangement, jusqu'à la portion principale 80 de chacun des rails supérieur 36 et inférieur 38.

Ensuite, l'opérateur exerce une traction selon X sur ledit deuxième volet 34, par exemple au moyen de l'élément de préhension 78, de sorte à déplacer ledit volet 34 vers la languette 50 du panneau 30. Les premiers galets supérieur 70 et inférieur 74 quittent ainsi les deuxièmes 82 portions d'extrémité des rails supérieur 36 et inférieur 38 et rejoignent la portion principale 80 desdits rails, via les deuxièmes portions intermédiaires 88.

Le deuxième volet 34 est ainsi dans la configuration de la figure 1, qui donne accès aux vannes 20, 22 du compartiment technique 16. Eventuellement, il est possible de déplacer le deuxième volet 34 dans une configuration d'ouverture totale, dans laquelle ledit deuxième volet est entièrement dissimulé derrière la languette 50.

Afin d'accéder à des vannes ou à d'autres équipements situés derrière le premier volet 32, l'opérateur déplace d'abord le deuxième volet 34 en configuration fermée. Ensuite, il déplace le premier volet 32 en configuration ouverte, par un procédé analogue à celui décrit ci-dessus pour le deuxième volet 34.

Selon un mode de réalisation, le premier volet 32 donne accès à des robinets de coupure (non représentés) du compartiment technique 16, permettant l'entretien d'un circuit pneumatique de freinage du véhicule 10 ; et le deuxième volet 34 donne accès à des vannes 20, 22 de vidange et/ou de rinçage permettant l'entretien d'un circuit hydraulique du véhicule 10.

L'ouverture séquentielle des premier 32 et deuxième 34 volets, telle que décrite ci-dessus, permet notamment de protéger de l'humidité les robinets de coupure du circuit pneumatique lors de l'utilisation des vannes 20, 22 du circuit hydraulique.

Le dispositif de fermeture 18 décrit ci-dessus permet de dédier un ou plusieurs accès aux opérations de maintenance régulière ne nécessitant pas un volume d'accès important sur le compartiment technique 16.

Si des opérations de maintenance plus conséquentes sont nécessaires, le panneau 30 est démonté de la face extérieure de la paroi latérale 14, donnant accès à la totalité du compartiment technique 16.

Le véhicule terrestre 10 tel que décrit ci-dessus permet un accès facilité aux compartiments techniques, tout en évitant un dépassement de gabarit en cas d'ouverture intempestive d'un volet, notamment en cours de déplacement du véhicule. Les volets sont simplement coulissants par rapport à la caisse, sans nécessiter de vérins d'ouverture.

## Revendications

1. Caisse (12) de véhicule (10) terrestre comprenant : une paroi externe (14), sensiblement verticale, ladite paroi externe s'étendant dans une direction longitudinale (X) horizontale ; un compartiment technique (16) comprenant une ouverture (24) débouchant sur ladite paroi externe ; et au moins un dispositif (18) de fermeture apte à fermer de manière réversible le compartiment technique, ledit dispositif de fermeture étant mobile entre une configuration ouverte et une configuration fermée ;
la caisse étant **caractérisée en ce que** :
le dispositif de fermeture comporte : un panneau (30) fixé à la paroi externe et recouvrant l'ouverture du compartiment technique, ledit panneau comprenant un premier (44) et un deuxième (46) orifices alignés selon la direction longitudinale ;
un premier volet (32) associé au premier orifice ; et un deuxième volet (34) associé au deuxième orifice ; et
un premier rail (36, 38) fixé au panneau, chacun des premier et deuxième volets comprenant des moyens (70, 72, 74, 76) de coulissement dans ledit premier rail, chacun des premier et deuxième volets étant mobile par rapport au premier rail entre une configuration ouverte et une configuration fermée, lesdites configurations ouverte et fermée correspondant respectivement à une ouverture et à une fermeture de l'orifice associé audit volet.

2. Caisse selon la revendication 1, dans laquelle le dispositif de fermeture (18) est configuré de sorte que, lorsque l'un des premier (32) et deuxième (34) volets est en configuration ouverte, l'autre des premier et deuxième volet est bloqué en configuration fermée.

3. Caisse selon la revendication 1 ou la revendication 2, dans laquelle les moyens de coulissement de chacun des premier (32) et deuxième (34) volets dans le premier rail (36, 38) comprennent au moins un galet (70, 72, 74, 76) apte à coulisser dans ledit premier rail.

4. Caisse selon la revendication 3, dans laquelle:
- le premier rail comporte au moins une portion principale (80), s'étendant selon la direction longitudinale, et une première (90) et une deuxième (92) portions de rangement, associées respectivement au premier (32) et au deuxième (34) volets, chacune desdites portions de rangement ouvrant sur la portion principale ;
- dans la configuration fermée de chacun des premier et deuxième volets, l'au moins un galet (70, 74) dudit premier ou deuxième volet est dans la portion de rangement (90, 92) associée audit volet ; et
- dans la configuration ouverte de chacun des premier et deuxième volets, l'au moins un galet (70, 74) dudit premier ou deuxième volet est dans la portion principale (80).

5. Caisse selon la revendication 4 prise en combinaison avec la revendication 2, dans laquelle le dispositif de fermeture est configuré de sorte que, lorsque l'au moins un galet (70, 74) de l'un des premier et deuxième volet est dans la portion principale (80) du premier rail, l'au moins un galet (70, 74) de l'autre des premier et deuxième volet est bloqué dans la portion de rangement (90, 92) associée.

6. Caisse selon l'une des revendications précédentes, dans laquelle les premier (32) et deuxième (34) volets et le premier rail (36, 38) sont fixés à une face (40) du panneau orientée vers l'intérieur du compartiment technique (16).

7. Caisse selon l'une des revendications précédentes, dans laquelle le dispositif de fermeture (18) comporte en outre un deuxième rail (36, 38) fixé au panneau, chacun des premier et deuxième volets comprenant des moyens (70, 72, 74, 76) de coulissement dans ledit deuxième rail, chacun des premier et deuxième volets étant mobile par rapport au deuxième rail entre la configuration ouverte et la configuration fermée.

8. Caisse selon la revendication 7, dans laquelle l'un (36) des premier et deuxième rails est disposé au-dessus des premier (44) et deuxième (46) orifices, l'autre (38) des premier et deuxième rails étant disposé au-dessous des premier et deuxième orifices.

9. Caisse selon l'une des revendications précédentes, dans laquelle le compartiment technique (16) comprend au moins une vanne (20, 22) de vidange et/ou de rinçage et/ou au moins un robinet de coupure de circuit pneumatique du véhicule.

10. Véhicule (10) terrestre comprenant une caisse (12) selon l'une quelconque des revendications précédentes.

## Patentansprüche

1. Wagenkasten (12) eines Landfahrzeugs (10) umfassend: eine im Wesentlichen vertikale Außenwand (14), wobei sich die Außenwand in einer horizontalen Längsrichtung (X) erstreckt; ein Technikfach (16), das sich zu der Außenwand öffnet (24); und mindestens eine Verschlussvorrichtung (18), die dazu geeignet ist, das Technikfach reversibel zu schließen, wobei die Verschlussvorrichtung zwischen einer offenen und einer geschlossenen Konfiguration beweglich ist;
wobei der Kasten **dadurch gekennzeichnet ist, dass**
die Verschlussvorrichtung umfasst: eine Platte (30), die an der Außenwand befestigt ist und die Öffnung des Technikfachs abdeckt, wobei die Platte eine erste (44) und eine zweite (46) Öffnung umfasst, die entlang der Längsrichtung ausgerichtet sind;
eine erste Klappe (32), die der ersten Öffnung zugeordnet ist; und eine zweite Klappe (34), die der zweiten Öffnung zugeordnet ist; und
eine erste Schiene (36, 38), die an der Platte befestigt ist, wobei jede der ersten und zweiten Klappen Mittel (70, 72, 74, 76) zum Gleiten in der ersten Schiene umfasst, wobei jede der ersten und zweiten Klappen in Bezug auf die erste Schiene zwischen einer offenen und einer geschlossenen Konfiguration beweglich ist, wobei die offene und die geschlossene Konfiguration jeweils einem Öffnen und einem Schließen der der Klappe zugeordneten Öffnung entsprechen.

2. Kasten nach Anspruch 1, wobei die Verschlussvorrichtung (18) so konfiguriert ist, dass, wenn sich eine der ersten (32) und zweiten (34) Klappen in der offenen Konfiguration befindet, die andere der ersten und zweiten Klappen in der geschlossenen Konfiguration blockiert ist.

3. Kasten nach Anspruch 1 oder Anspruch 2, wobei die Mittel zum Gleiten jeder der ersten (32) und zweiten (34) Klappen in der ersten Schiene (36, 38) mindestens eine Rolle (70, 72, 74, 76) umfassen, die in der ersten Schiene gleiten kann.

4. Kasten nach Anspruch 3, wobei:
- die erste Schiene mindestens einen Hauptabschnitt (80), der sich in Längsrichtung erstreckt, und einen ersten (90) und einen zweiten (92) Verstauungsabschnitt aufweist, die der ersten (32) bzw. der zweiten (34) Klappe zugeordnet sind, wobei sich jeder der Verstauungsabschnitte zum Hauptabschnitt hin öffnet;
- in der geschlossenen Konfiguration jeder der ersten und zweiten Klappen die mindestens eine Rolle (70, 74) der ersten oder zweiten Klappe sich in dem der Klappe zugeordneten Verstauungsabschnitt (90, 92) befindet; und
- in der offenen Konfiguration jeder der ersten und zweiten Klappen die mindestens eine Rolle (70, 74) der ersten oder zweiten Klappe in dem Hauptabschnitt (80) ist.

5. Kasten nach Anspruch 4 in Kombination mit Anspruch 2, wobei die Verschlussvorrichtung so konfiguriert ist, dass, wenn sich mindestens eine Rolle (70, 74) einer der ersten und zweiten Klappen in dem Hauptabschnitt (80) der ersten Schiene befindet, die mindestens eine Rolle (70, 74) der anderen der ersten und zweiten Klappen in dem zugehörigen Verstauungsabschnitt (90, 92) blockiert ist.

6. Kasten nach einem der vorhergehenden Ansprüche, wobei die erste (32) und die zweite (34) Klappe und die erste Schiene (36, 38) an einer Seite (40) der Platte befestigt sind, die zum Inneren des Technikfachs (16) hin gerichtet ist.

7. Kasten nach einem der vorhergehenden Ansprüche, wobei die Verschlussvorrichtung (18) außerdem eine zweite Schiene (36, 38) umfasst, die an der Platte befestigt ist, wobei jede der ersten und zweiten Klappe Mittel (70, 72, 74, 76) zum Gleiten in der zweiten Schiene umfasst, wobei jede der ersten und zweiten Klappe relativ zu der zweiten Schiene zwischen der offenen und der geschlossenen Konfiguration beweglich ist.

8. Kasten nach Anspruch 7, wobei eine (36) der ersten und zweiten Schiene über der ersten (44) und zweiten (46) Öffnung angeordnet ist und die andere (38) der ersten und zweiten Schiene unter der ersten und zweiten Öffnung angeordnet ist.

9. Kasten nach einem der vorhergehenden Ansprüche, wobei das Technikfach (16) mindestens ein Ventil (20, 22) zum Entleeren und/oder Spülen und/oder mindestens einen Hahn zum Unterbrechen des pneumatischen Kreislaufs des Fahrzeugs umfasst.

10. Landfahrzeug (10) mit einen Kasten (12) nach einem der vorherigen Ansprüche.

## Claims

1. A body (12) for a land vehicle (10) comprising: a substantially vertical outer wall (14), said outer wall extending in a horizontal longitudinal direction (X); a technical compartment (16) comprising an opening (24) onto said outer wall; and at least one closing device (18) capable of reversibly closing the technical compartment, said closing device being movable between an open configuration and a closed configuration;
the body being **characterised in that**:
the closure device comprises: a panel (30) fixed to the outer wall and covering the opening of the technical compartment, said panel comprising a first (44) and a second (46) aperture aligned in the longitudinal direction;
a first flap (32) associated with the first aperture; and a second flap (34) associated with the second aperture; and
a first rail (36, 38) fixed to the panel, each of the first and second flaps comprising means (70, 72, 74, 76) for sliding in said first rail, each of the first and second flaps being movable relative to the first rail between an open configuration and a closed configuration, said open and closed configurations corresponding respectively to the opening and closing of the aperture associated with said flap.

2. A body according to claim 1, in which the closure device (18) is configured so that, when one of the first (32) and second (34) flaps is in the open configuration, the other of the first and second flaps is blocked in the closed configuration.

3. A body according to claim 1 or claim 2, in which the means for sliding each of the first (32) and second (34) flaps in the first rail (36, 38) comprise at least one roller (70, 72, 74, 76) able to slide in the said first rail.

4. A body according to claim 3, wherein:
- the first rail comprises at least one main portion (80), extending in the longitudinal direction, and first (90) and second (92) storage portions, associated respectively with the first (32) and second (34) flaps, each of said storage portions opening onto the main portion;
- in the closed configuration of each of the first and second flaps, at least one roller (70, 74) of said first or second flap is in the storage portion (90, 92) associated with said flap; and
- in the open configuration of each of the first and second flaps, at least one roller (70, 74) of said first or second flap is in the main portion (80).

5. A body according to claim 4 taken in combination with claim 2, wherein the closure device is configured so that, when at least one roller (70, 74) of one of the first and second flaps is in the main portion (80) of the first rail, at least one roller (70, 74) of the other of the first and second flaps is locked in the associated storage portion (90, 92).

6. A body according to one of the preceding claims, in which the first (32) and second (34) flaps and the first rail (36, 38) are fixed to a side (40) of the panel facing the inside of the technical compartment (16).

7. A body according to one of the preceding claims, wherein the closure device (18) further comprises a second rail (36, 38) fixed to the panel, each of the first and second flaps comprising means (70, 72, 74, 76) for sliding in said second rail, each of the first and second flaps being movable relative to the second rail between the open configuration and the closed configuration.

8. A body as claimed in claim 7, wherein one (36) of the first and second rails is placed above the first (44) and second (46) apertures, the other (38) of the first and second rails being placed below the first and second apertures.

9. A body according to one of the preceding claims, in which the technical compartment (16) comprises at least one drain and/or flush valve (20, 22) and/or at least one shut-off valve for the vehicle's pneumatic circuit.

10. A land vehicle (10) comprising at least one body (12) according to any of the preceding claims.
